# EUROPEAN PATENT APPLICATION

(11) **EP 4 834 072 A1**
(43) Date of publication of application: **04.11.2026**
(21) Application number: 26172106.2
(22) Date of filing: 14.04.2026
(51) Int. Cl.: A01B 76/00, G06N 3/02

(54) **SYSTEM AND METHOD FOR IMPROVING AGRICULTURAL OPERATIONS VIA ARTIFICIAL INTELLIGENCE**

(30) Priority: 01.05.2025 GB 202506640
(71) Applicant: AGCO International GmbH, 8212 Neuhausen am Rheinfall (CH)
(72) Inventor: BECH, Søren, DK8900 Randers (DK); LAUSDAHL, Kenneth, DK8900 Randers (DK); NILSSON, Rene, DK8900 Randers (DK); ZHOU, Kun, 8930 Randers (DK); LUND, Jens, DK8900 Randers (DK)
(74) Representative: AGCO Intellectual Property Department

(57) **Abstract**

A control system (100) for controlling agricultural operations. The control system includes one or more controllers and is configured to extract relevant features from a dataset of data relating to operation of a first agricultural implement (200A-E). The control system (100) is further configured to apply the relevant features to a deep learning model as input sequences. The control system (100) is further configured to control the first agricultural implement (200A-E) according to an output of the deep learning model.

## Description

### CROSS-REFERENCE TO RELATED APPLICATIONS

### FIELD

Embodiments of the present disclosure relate generally to systems and methods for using machine learning to enhance control, including automatic control, of agricultural implements.

### BACKGROUND

Agricultural operations often have inefficiencies, which have somewhat been reduced by implementing automatic control in modern machinery. Unfortunately, maintaining or obtaining a desired quality of operation requires either starting with good initial control parameters or operating for sufficiently long enough to reach a steady state in which the desired quality of operation is reached.

### BRIEF SUMMARY

The present invention solves the above problems and other problems by providing a control system for controlling agricultural operations via artificial intelligence. The artificial intelligence identifies performance indicators associated with the agricultural operations and makes correlations therebetween that otherwise would be unrealized or underdeveloped, thus obtaining a desired quality of operation.

According to an aspect of the invention, there is provided a control system that includes one or more controllers and is configured to extract relevant features from a dataset of data relating to operation of a first agricultural implement. The control system is also configured to apply the relevant features to a deep learning model as input sequences. The control system is further configured to control the first agricultural implement according to an output of the deep learning model.

The control system may be further configured to control a second agricultural implement according to the output of the deep learning model.

The control system may be further configured to update the deep learning model with new data relating to operation of the first agricultural implement.

The control system may be further configured to monitor and/or to evaluate performance of the deep learning model.

The control system may be further configured to train the deep learning model based on the performance of the deep learning model.

The control system may be further configured to control the first agricultural implement according to the output of the deep learning model in real time.

The control system may be further configured to control the second agricultural implement according to the output of the deep learning model in real time.

The deep learning model may be or may include one of a recurrent neural network (RNN), a long short-term memory (LSTM) network, and a transformer-based model.

The data may include performance indicators.

In another aspect of the invention there is provided a control system for controlling agricultural operations. The control system includes one or more controllers and is configured to obtain data relating to operation of agricultural implements thereby forming a dataset. The control system is further configured to extract relevant features from the dataset. The control system is further configured to train a deep learning model on the dataset. The control system is further configured to apply the relevant features to the deep learning model as input sequences.

The control system may be further configured to select the deep learning model from a plurality of deep learning models.

The plurality of deep learning models may be or may include an RNN, an LSTM network, and a transformer-based model.

The data may include performance indicators.

The control system may be further configured to monitor and/or to evaluate a performance of the trained deep learning model on the dataset.

In another aspect of the invention there is provided a method of controlling agricultural operations. The method includes a step of extracting relevant features from a dataset of data relating to operation of a first agricultural implement. The method further includes a step of applying the relevant features to a deep learning model as input sequences. The method further includes a step of controlling the first agricultural implement according to an output of the deep learning model.

The method further may include a step of controlling a second agricultural implement according to the output of the deep learning model.

The method further may include a step of updating the deep learning model with new data relating to operation of the first agricultural implement.

The method further may include a step of monitoring a performance of the deep learning model.

The method further may include a step of training the deep learning model based on the performance of the deep learning model.

The step of controlling the first agricultural implement may include controlling the first agricultural implement according to the output of the deep learning model in real time.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is an environmental view of certain components of a system in accordance with an embodiment of the invention;
FIG. 2 is a schematic diagram of certain components of the system of FIG. 1;
FIG. 3 is a flow diagram depicting certain steps of a method in accordance with another embodiment of the invention; and
FIG. 4 is a flow diagram depicting certain steps of a method in accordance with another embodiment of the invention.

### DETAILED DESCRIPTION

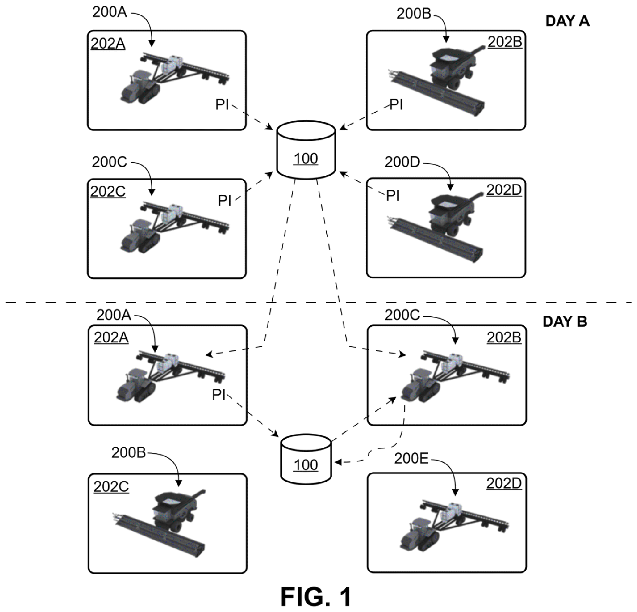

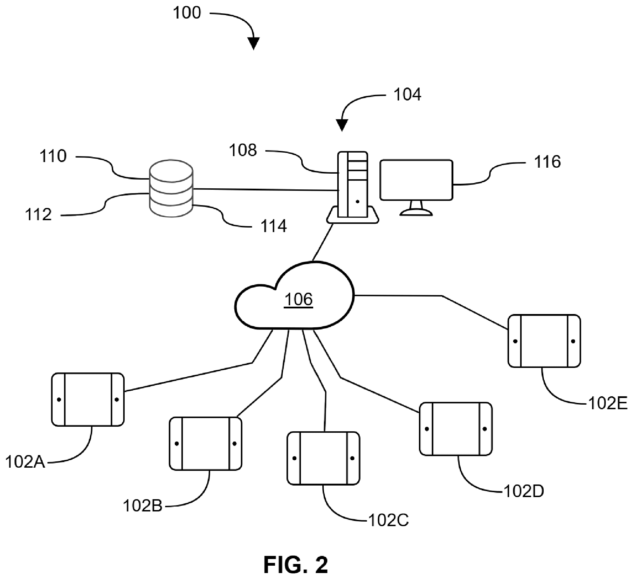

With reference to FIGS. 1 and 2, a control system 100 for use with a plurality of agricultural implements 200A-E will be described in detail. The agricultural implements 200A-E may be harvesters (e.g., grain harvesters), tillage implements, seeders, planters, combine harvesters, tractors, sprayers, balers, and the like. In some embodiments, construction machines such as excavators, compaction machines (e.g., rollers), loaders, bulldozers, skid steer machines, graders, and the like may be used. In yet other embodiments, forestry machines such as delimbers, feller bunchers, stump grinders, mulchers, yarders, forwarders, log loaders, harvesters, and the like may be used. Each agricultural implement 200A-E may be configured to autonomously, semi-autonomously, or non-autonomously perform operations on different fields 202A-D simultaneously or as a series of operations. The control system 100 broadly comprises a plurality of local computing devices 102A-E and a remote computing system 104.

Each local computing device 102A-E may be configured to be located on and directly associated with one of the agricultural implements 200A-E. The local computing devices 102A-E may be substantially similar, so only local computing device 102A will be described in detail.

Local computing device 102A may include electronics such as one or more controllers, sensors, busses, and computers. The local computing device 102A may include at least a processor, a memory, a communication interface, and one or more sensors. The local computing device 102A can be considered an Internet of Things (IoT) device. Also, in some embodiments, the local computing device 102A may be part of a cloud computing system. The local computing device 102A and agricultural implement 200A can include both electronic hardware and software that can integrate between the systems of the local computing device 102A and the agricultural implement 200A. Such hardware and software (such as controllers and sensors and other types of electrical and/or mechanical devices) can be configured to communicate with the remote computing system 104 and with the other local computing devices 102B-E via a communications network 106.

The network 106 can include one or more local area networks (LAN(s)) and/or one or more wide area networks (WAN(s)). In some embodiments, the network 106 includes the Internet and/or any other type of interconnected communications network. The network 106 can also include a single computer network or a telecommunications network. More specifically, in some embodiments, the network 106 includes a local area network (LAN) such as a private computer network that connects computers in small physical areas, a wide area network (WAN) to connect computers located in different geographical locations, and/or a middle area network (MAN) to connect computers in a geographic area larger than that covered by a large LAN but smaller than the area covered by a WAN.

At least each shown component of the network 106 (including local computing device 102A) can be or include a computing system which includes memory that includes media. The media includes or is volatile memory components, non-volatile memory components, or a combination of thereof. In general, in some embodiments, each of the computing systems includes a host system that uses memory. For example, the host system writes data to the memory and read data from the memory. The host system is a computing device that includes a memory and a data processing device. The host system includes or is coupled to the memory so that the host system reads data from or writes data to the memory. The host system is coupled to the memory via a physical host interface. The physical host interface provides an interface for passing control, address, data, and other signals between the memory and the host system.

FIG. 2 illustrates parts of the remote computing system 104 within which a set of instructions are executed for causing a machine to perform any one or more of the methodologies discussed herein performed by a computing system. In some embodiments, the remote computing system 104 operates with additional computing systems to provide increased computing capacity in which multiple computing systems operate together to perform any one or more of the methodologies discussed herein that are performed by a computing system.

In some embodiments, the remote computing system 104 corresponds to a host system that includes, is coupled to, or utilizes memory or is used to perform the operations performed by any one of the computing systems described herein. In some embodiments, the machine is connected (e.g., networked) to other machines in a LAN, an intranet, an extranet, or the Internet. In some embodiments, the machine operates in the capacity of a server in a client-server network environment, as a peer machine in a peer-to-peer (or distributed) network environment, or as a server in a cloud computing infrastructure or environment. In some embodiments, the machine is a personal computer (PC), a tablet PC, a cellular telephone, a web appliance, a server, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein performed by computing systems.

The remote computing system 104 may include a processing device 108, a main memory 110 (e.g., read-only memory (ROM), flash memory, dynamic random-access memory (DRAM), etc.), a static memory 112 (e.g., flash memory, static random-access memory (SRAM), etc.), and a data storage system 114, which communicate with each other via a bus. The processing device 108 represents one or more general-purpose processing devices such as a microprocessor, a central processing unit, or the like. More particularly, the processing device can include a microprocessor or a processor implementing other instruction sets, or processors implementing a combination of instruction sets. Alternatively, the processing device 108 is one or more special-purpose processing devices such as an application-specific integrated circuit (ASIC), a field programmable gate array (FPGA), a digital signal processor (DSP), a network processor, or the like. The processing device 108 is configured to execute instructions for performing the operations discussed herein performed by a computing system. In some embodiments, the remote computing system 104 may include a network interface device to communicate over a communications network. Such a communications network can include one or more local area networks (LAN(s)) and/or one or more wide area networks (WAN(s)). In some embodiments, the communications network includes the Internet and/or any other type of interconnected communications network. The communications network can also include a single computer network or a telecommunications network.

The data storage system 114 may include a machine-readable storage medium (also known as a computer-readable medium) on which is stored one or more sets of instructions or software embodying any one or more of the methodologies or functions described herein performed by a computing system. The instructions also reside, completely or at least partially, within the main memory 110 or within the processing device 108 during execution thereof by the remote computing system 104, the main memory 110 and the processing device 108 also constituting machine-readable storage media. While the machine-readable storage medium may be a single medium, the term "machine-readable storage medium" should be taken to include a single medium or multiple media that store the one or more sets of instructions. The term "machine-readable storage medium" shall also be taken to include any medium that is capable of storing or encoding a set of instructions for execution by the machine and that causes the machine to perform any one or more of the methodologies of the present disclosure performed by a computing system. The term "machine-readable storage medium" shall accordingly be taken to include solid-state memories, optical media, or magnetic media.

Also, as shown, the remote computing system 104 includes user interface 116 that includes a display, in some embodiments, and, for example, implements functionality corresponding to any one of the UI devices disclosed herein. A UI, such as UI 116, or a UI device described herein includes any space or equipment where interactions between humans and machines occur. A UI described herein allows operation and control of the machine from a human user, while the machine simultaneously provides feedback information to the user. Examples of a user interface, or UI device include the interactive aspects of computer operating systems (such as GUIs), machinery operator controls, and process controls. All references cited herein are incorporated herein in their entireties. If there is a conflict between definitions herein and in an incorporated reference, the definition herein shall control.

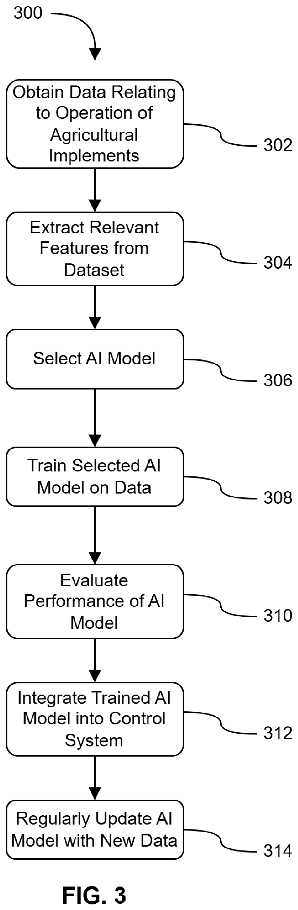

Turning to FIG. 3, a method 300 of creating an artificial intelligence system for use by the control system 100 will now be described. First, data relating to operation of agricultural implements may be obtained from some of the agricultural implements 200A-E to create a dataset, as shown in block 302. The data may be from different fields or aspects of operation. The data may include machine capabilities, crop type, soil type, elevation data, weather conditions, and the like. Some of the data may be sequence based.

Relevant features may then be extracted from the dataset, as shown in block 304. Relevant features may include breakdowns, seeding rate, harvesting rate, driving speed, vibrations, and the like.

A suitable deep learning/artificial intelligence model may then be selected, as shown in block 306. The AI model may be a recurrent neural network (RNN) model, a long short-term memory (LSTM) network model, a transformer-based model, or any other suitable model. The above models may be capable of capturing temporal dependencies and learning complex patterns in the data.

The selected Al model may then be trained on the data (which at this point may be considered pre-processed data), as shown in block 308. To that end, the extracted features may be used as input sequences to the AI model.

Performance of the AI model on the dataset may then be evaluated to ensure its generalization to unseen data, as shown in block 310. For evaluation, certain metrics such as mean absolute error, root mean squared error, or custom metrics relevant to the specific application may be used.

The trained Al model may then be integrated into the control system 100, as shown in block 312. The Al model may thus provide improved real-time route planning, optimization, and other benefits.

The trained AI model may also be regularly updated with new data, as shown in block 314. This ensures the performance of the Al model remains accurate and up-to-date. To that end, the performance of the AI model may also be monitored and retrained or fine-tuned as needed.

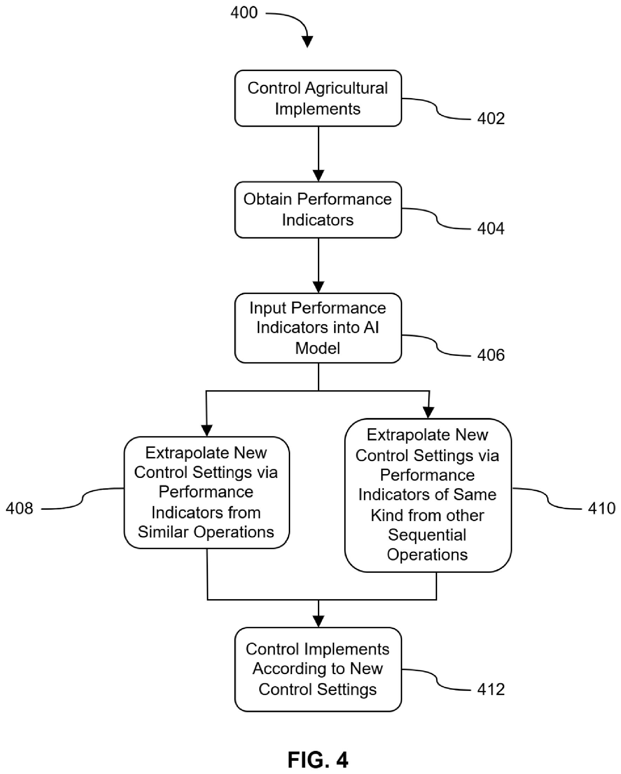

Turning to FIG. 4, and with reference to FIG. 1, a method 400 of integrating the above artificial intelligence system into control of agricultural implements 200A-E via control system 100 while will now be described. First, operation of some of the agricultural implements 200A-E may be performed with baseline control settings, as shown in block 402.

Performance indicators may then be obtained from some of the agricultural implements 200A-E, as shown in block 404. For example, as shown in FIG. 1, data relating to operation of agricultural implements 200A-D may be obtained by the control system 100 on Day A.

Performance indicators are data related to the operation performance of an agricultural implement and are bounded with data used to evaluate them (e.g., sensor values, pressures, vibrations, weather conditions, and the like). The performance indicators may be obtained from agricultural implements operating in direct or indirect succession, on the same pass, on the same day, on different days, in the same field, or in different fields.

The performance indicators may then be input into the AI model, as shown in block 406. As discussed above, the performance indicators may be input sequences to the Al model.

New control settings may then be extrapolated via the Al model. This can take one of several forms. For instance, The Al model may be used to determine how the performance indicators of similar operations in the same field or area share similar conditions, as shown in block 408. Alternatively, the AI model may be used to determine if performance indicators of other operations that follow previous operations are the same kind as performance indicators of operations that preceded the current operations, as shown in block 410. In other words, the Al model may determine if performance indicators are indeed similar and extrapolate new control settings in the same way as other operations have done but altered to current actual settings while combined with present measurements of a particular agricultural implement.

Agricultural implements may then be operated according to the new control settings, as shown in block 412. For example, as shown in FIG. 1, agricultural implements 200A and 200C may be operated according to the new control settings on Day B. The above method steps may be recursively performed for real-time, continued improvement. That is, performance indicators may be obtained during operation with the new control settings for further control and for updating the Al model. See also FIG. 1, in which agricultural implement 200C is recursively operated according to new control settings generated by the control system on the same day (Day B).

The above-described invention provides several advantages. For example, the invention provides improved agricultural implement performance, more efficient operation (e.g., optimal paths), higher crop yield, minimized costs, and the like. The improved control may be used to improve subsequent control of the same agricultural implement or other agricultural implements in the same system or other systems, thus improving subsequent control beyond control of a particular agricultural implement.

### Additional Considerations

Throughout this specification, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the current invention can include a variety of combinations and/or integrations of the embodiments described herein.

Although the present application sets forth a detailed description of numerous different embodiments, it should be understood that the legal scope of the description is defined by the words of the claims set forth at the end of this patent and equivalents. The detailed description is to be construed as exemplary only and does not describe every possible embodiment since describing every possible embodiment would be impractical. Numerous alternative embodiments may be implemented, using either current technology or technology developed after the filing date of this patent, which would still fall within the scope of the claims.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of routines, subroutines, applications, or instructions. These may constitute either software (e.g., code embodied on a machine-readable medium or in a transmission signal) or hardware. In hardware, the routines, etc., are tangible units capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as computer hardware that operates to perform certain operations as described herein.

In various embodiments, computer hardware, such as a processor, may be implemented as special purpose or as general purpose. For example, the processor may comprise dedicated circuitry or logic that is permanently configured, such as an application-specific integrated circuit (ASIC), or indefinitely configured, such as an FPGA, to perform certain operations. The processor may also comprise programmable logic or circuitry (e.g., as encompassed within a general-purpose processor or other programmable processor) that is temporarily configured by software to perform certain operations. It will be appreciated that the decision to implement the processor as special purpose, in dedicated and permanently configured circuitry, or as general purpose (e.g., configured by software) may be driven by cost and time considerations.

Accordingly, the term "processor" or equivalents should be understood to encompass a tangible entity, be that an entity that is physically constructed, permanently configured (e.g., hardwired), or temporarily configured (e.g., programmed) to operate in a certain manner or to perform certain operations described herein. Considering embodiments in which the processor is temporarily configured (e.g., programmed), each of the processors need not be configured or instantiated at any one instance in time. For example, where the processor comprises a general-purpose processor configured using software, the general-purpose processor may be configured as respective different processors at different times. Software may accordingly configure the processor to constitute a particular hardware configuration at one instance of time and to constitute a different hardware configuration at a different instance of time.

Computer hardware components, such as communication elements, memory elements, processors, and the like, may provide information to, and receive information from, other computer hardware components. Accordingly, the described computer hardware components may be regarded as being communicatively coupled. Where multiple of such computer hardware components exist contemporaneously, communications may be achieved through signal transmission (e.g., over appropriate circuits and buses) that connect the computer hardware components. In embodiments in which multiple computer hardware components are configured or instantiated at different times, communications between such computer hardware components may be achieved, for example, through the storage and retrieval of information in memory structures to which the multiple computer hardware components have access. For example, one computer hardware component may perform an operation and store the output of that operation in a memory device to which it is communicatively coupled. A further computer hardware component may then, at a later time, access the memory device to retrieve and process the stored output. Computer hardware components may also initiate communications with input or output devices, and may operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods or routines described herein may be at least partially processor-implemented. For example, at least some of the operations of a method may be performed by one or more processors or processor-implemented hardware modules. The performance of certain of the operations may be distributed among the one or more processors, not only residing within a single machine, but deployed across a number of machines. In some example embodiments, the processors may be located in a single location (e.g., within a home environment, an office environment or as a server farm), while in other embodiments the processors may be distributed across a number of locations.

Unless specifically stated otherwise, discussions herein using words such as "processing", "computing", "calculating", "determining", "presenting", "displaying", or the like may refer to actions or processes of a machine (e.g., a computer with a processor and other computer hardware components) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein, the terms "comprises", "comprising", "includes", "including", "has", "having", or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

The patent claims at the end of this patent application are not intended to be construed under 35 U.S.C. § 112(f) unless traditional means-plus-function language is expressly recited, such as "means for" or "step for" language being explicitly recited in the claim(s).

Although the technology has been described with reference to the embodiments illustrated in the attached drawing figures, it is noted that equivalents may be employed and substitutions made herein without departing from the scope of the technology as recited in the claims.

Having thus described various embodiments of the technology, what is claimed as new and desired to be protected by Letters Patent includes the following:

## Claims

1. A control system (100) for controlling agricultural operations, the control system (100) comprising one or more controllers and being configured to:
extract relevant features from a dataset of data relating to operation of a first agricultural implement (200A-E);
apply the relevant features to a deep learning model as input sequences; and
control the first agricultural implement (200A-E) according to an output of the deep learning model.

2. The control system (100) of claim 1, the control system (100) being further configured to control a second agricultural implement (200A-E) according to the output of the deep learning model.

3. The control system (100) of claim 1 or 2, the control system (100) being further configured to update the deep learning model with new data relating to operation of the first agricultural implement (200A-E).

4. The control system (100) of claim 3, the control system (100) being further configured to train the deep learning model based on the performance of the deep learning model.

5. The control system (100) of any of claims 1-4, the control system (100) being further configured to control the first agricultural implement (200A-E) according to the output of the deep learning model in real time.

6. The control system (100) of claim 2, the control system (100) being further configured to control the second agricultural implement (200A-E) according to the output of the deep learning model in real time.

7. A control system (100) for controlling agricultural operations, the control system (100) comprising one or more controllers and being configured to:
obtain data relating to operation of agricultural implements (200A-E) thereby forming a dataset;
extract relevant features from the dataset;
train a deep learning model on the dataset; and
apply the relevant features to the deep learning model as input sequences.

8. The control system (100) of any one of the preceding claims, the deep learning model including a recurrent neural network (RNN), a long short-term memory (LSTM) network, and a transformer-based model.

9. The control system (100) of any one of the preceding claims, the data including performance indicators.

10. The control system (100) of any one of the preceding claims, the control system (100) being further configured to monitor and/or to evaluate a performance of the trained deep learning model on the dataset.

11. A method of controlling agricultural operations, the method comprising steps of:
extracting relevant features from a dataset of data relating to operation of a first agricultural implement (200A-E);
applying the relevant features to a deep learning model as input sequences; and
controlling the first agricultural implement (200A-E) according to an output of the deep learning model.

12. The method of claim 11, further comprising a step of controlling a second agricultural implement (200A-E) according to the output of the deep learning model.

13. The method of claims 11 or 12, further comprising a step of updating the deep learning model with new data relating to operation of the first agricultural implement (200A-E).

14. The method of any of claims 11-13, further comprising a step of monitoring and/or evaluating a performance of the deep learning model.

15. The method of any of claims 11-14, further comprising a step of training the deep learning model based on the performance of the deep learning model.

16. The method of any of claims 11-15, wherein the step of controlling the first agricultural implement (200A-E) includes controlling the first agricultural implement (200A-E) according to the output of the deep learning model in real time.
